# EUROPÄISCHE PATENTSCHRIFT

(11) **EP 0 638 792 B1**
(45) Veröffentlichungstag und Bekanntmachung des Hinweises auf die Patenterteilung: **26.03.1997**
(21) Anmeldenummer: 93250223.0
(22) Anmeldetag: 11.08.1993
(51) Int. Cl.: G01M 3/26

(54) **Verfahren und Einrichtung zur Dichtheitsprüfung an rohrschuhnahen Zementationsintervallen**
Procedure and facility for leak testing of a cemented part of a pipe
Procédé et installation d'essai d'étanchéité de la partie cementée d'un tuyau

(43) Veröffentlichungstag der Anmeldung: 15.02.1995
(73) Patentinhaber: Untergrundspeicher- und Geotechnologie-Systeme GmbH, 15749 Mittenwalde (DE)
(72) Erfinder: Strelow, Dieter, Ing., D-15755 Schwerin (DE); Bäreke, Karl-Heinz, Dipl.-Ing., D-15711 Königs Wusterhausen (DE); Jäpel, Gernot, Dipl.-Ing., D-15711 Krummensee (DE)
(74) Vertreter: Radwer, Dieter

(56) Entgegenhaltungen:
- DE-A- 3 922 209

## Beschreibung

Die Erfindung betrifft ein Verfahren und eine Einrichtung zur Dichtheitsprüfung rohrschuhnaher Zementationsintervalle von Tiefbohrungen im dichten Gebirge, insbesondere zum Nachweis der technischen Dichtheit des Zementes hinter den letzten zementierten Verrohrungen von Speicherkavernen unter Verwendung eines gasförmigen Prüfmediums.

Beim Errichten von Gasspeicherkavernen im Steinsalz sind zu verschiedenen Zeitpunkten Dichtheitsprüfungen durchzuführen. Neben Dichtheitsnachweisen zur Verrohrung hat die Dichtheitsprüfung des zementierten Rohrschuhbereichs der letzten Verrohrung besondere Bedeutung, da es notwendig ist, Fließwege entlang des Zementmantels hinter den Rohren auszuschließen.

Die Dichtheitsprüfungen sind unmittelbar nach Beendigung der Bohrarbeiten, aber auch nach dem über Jahre währenden Aussolprozeß - also kurz vor der ersten Gasbefüllung - erforderlich. Die Dichtheitsnachweise erfolgen mit dem Ziel, eine auf das Prüfgas bezogene Mengenverlustrate zu ermitteln, die im Vergleich mit einem Zulässigkeitskriterium eine Voraussetzung für weitere Errichtungs- und Inbetriebnahmeabschnitte ist.

Zwecks Dichtheitsprüfung des rohrschuhnahen Zementationsintervalles wird der zu prüfende Raum unter und am Fuß der letzten zementierten Verrohrung mit einem Prüfgas, zumeist Luft, befüllt und mit einem Prüfdruck beaufschlagt.

Es ist Praxis, Prüfgasmengenbilanzen zu den Zeitpunkten Beginn und Ende der Prüfzeit aufzustellen und zu vergleichen. Die Prüfgasmengenbilanzen werden auf der Grundlage von Druck, Temperatur und Volumen des mit Prüfmedium gefüllten Raumes errechnet. Aus der Differenz der Bilanzen ist die Leckrate als Maß einer eventuellen Undichtigkeit bestimmbar.

Eine Temperaturausgleichszeit vor der eigentlichen Prüfzeit ermöglicht es, Temperaturänderungen im untertägig gelegenen Prüfraum weitgehend zu vernachlässigen.

In die Mengenverlustbilanzen gehen dann neben den Ausgangswerten von Prüfdruck, Prüfraumvolumen und Prüfgastemperatur lediglich Druckabfall und Änderungen des gasgefüllten Prüfraumvolumens ein.

Der maximale Fehler am Ergebnis der Dichtheitsprüfung, als reziproker Ausdruck für die Sensibilität der Messung ist somit die Summe der Fehler dieser 5 Einzelgrößen. Eine Erhöhung der Sensibilität bei der Bestimmung einer Einzelgröße erhöht auch die Qualität der Mengenbilanz und berechtigt, die Meßdauer entsprechend zu verkürzen.

Unter dieser Zielstellung wurden bereits verschiedene Lösungen, die in ihrem Aufbau und in ihrer Arbeitsweise unterschiedlich sind, vorgeschlagen.

Aus der DD-PS 107 780 sind beispielsweise Maßnahmen bekannt, die über Packereinsatz und Hilfsrohrtouren das unter Gasdruck zu setzende geometrische Hohlraumvolumen wesentlich verkleinern. Für die Prüfung der Dichtheit wird ansonsten ein radioaktives Prüfmedium eingeleitet und mit einem Prüfdruck beaufschlagt. Anschließend wird der Druckverlauf mittels Differenzdruckmeßeinrichtungen über eine bestimmte Prüfdauer verfolgt und nach Ausbau der Prüfgarnitur und Messung der Aufstiegshöhe des radioaktiven Prüfmediums der Dichtheitsgrad der Verbindung Rohrtour-Zementation-Erdschicht aus dem Druckverlauf und der Aufstiegshöhe des Prüfmediums bestimmt.

Aus der DD-PS 132 393 ist eine Differenzdruckmeßanordnung hoher Sensibilität unter Bohrfeldbedingungen bekannt, die die Meßfehler von Prüfdruck und Prüfdruckänderung minimiert.

In beiden vorgenannten Verfahren wird jedoch der relativ große Fehleranteil, der sich aus den Spiegelstandsveränderungen der anstehenden Bohrlochflüssigkeit und den daraus resultierenden Volumenänderungen des Prüfgases ergibt, nicht berücksichtigt. Das ist in beiden Verfahren auch insofern nicht erforderlich, da bei ihrem bestimmungsgemäßen Einsatz an Tiefbohrungen keine Kaverne mit ständig ablaufender Volumenkonvergenz und Nachsolung ansteht.

Beide Verfahren sind deshalb für Dichtheitsprüfungen nach Solprozessen nur dann einsetzbar, wenn es gelingt, während der Prüfdauer die Kavernenbohrung von der Kaverne durch dichte Zementbrücken zu trennen, da anderenfalls durch die Kompressibilität von Sole und Gebirge erhebliche, kaum erfaßbare Spiegelstandsänderungen das Meßergebnis verfälschen.

Die DD-PS 213 295 beschreibt ein Verfahren und eine Vorrichtung, die eine Dichtheitsprüfung rohrschuhnaher Zementationsintervalle mit einer sehr hohen Genauigkeit erlaubt. Für die Dichtheitsprüfung wird der nach obertage mittels Packer abgesperrte Prüfraum hinter der letzten zementierten Verrohrung mit einem Gasdruck beaufschlagt und die anstehende Bohrlochflüssigkeit in ein Befüllrohr der Prüfgarnitur verdrängt, wo die Spiegelstandsänderungen in dieser Rohrsektion mittels Löslichkeitsunterschiede über die Prüfdauer festgehalten werden.
Nach Prüfdruckeinstellung wird der Druckabfall und die Tendenz der Spiegelstandsänderungen durch Tiefenmanometer aufgezeichnet. Nach Ablauf der Prüfzeit wird der Druckverlauf nach Druckausgleich zwischen Prüfintervall und Hilfsstrang zur Erstellung einer Kontrollbilanz aufgezeichnet und der Prüfluftverlustrate aus Druckabfallverhalten und Spiegelstandsänderung gegenübergestellt.

Diese Lösung erfaßt auch eventuelle Spiegeländerungen sehr genau. Sie kann jedoch über größeren, offenen Kavernen nicht eingesetzt werden. Der Einsatz an Prüfgas wäre zu groß, und die Spiegeländerungen würden sich in Teufen verschieben, die weit außerhalb eines optimalen Meßbereiches liegen. Außerdem ist der technische Aufwand für das Installieren der Prüfgarnitur selbst relativ hoch.

Auch ist eine genau erfaßte Spiegeländerung für die letztlich interessierende Volumenänderung nur ein Faktor von mehreren. Mit dem Spiegelstand verändert sich in der Regel auch der Bohrlochdurchmesser in kaum meßbarer Größe und der zwangsläufig auftretende große Meßfehler geht wegen der quadratischen Abhängigkeit V = f(d²) in doppelter Größe in den Gesamtfehler ein.

Bekannt sind ferner "Blanket"-Testverfahren - F.Crotogino und H.Gomm "Anforderungen an die Dichtheit von Gaskavernenbohrungen, ihre Überprüfung und Repararturmöglichkeiten bei Leckagen" in Erdoel-Erdgas, 99. Jg., Heft 10 Seiten 333 ff -, um die Dichtheit rohrschuhnaher Zementationsintervalle an solegefüllten Kavernen zu prüfen. Hierzu wird Blanket im Bereich des Rohrschuhs bis kurz über das Kavernendach gepumpt. Eventuelle Undichtheiten an den Rohrinstallationen und in den Zementationen führen zu einem Verlust an Blanket und zu einer Spiegelanhebung, wobei die Dichtheit über eine Volumenbilanz des in den Prüfraum ein- und ausgepumpten Prüfmediums (Blanket) oder über die Spiegelteufendifferenz im Kavernenhals ermittelt werden. Die Probleme dieses Verfahrens liegen in der Nachweisgenauigkeit. So ist der Nachweis für kleinere Leckraten nur bei relativ langen Prüfzeiten möglich. Die durch die Konvergenz des Gebirges, die Nachsolung und die Kompressibilität der Sohle verursachten Spiegelsänderungen und die daraus resultierenden Meßfehler werden auch bei diesem Verfahren nicht ausgeschaltet. Von der gemessenen Leckage an Blanket kann auch nicht direkt auf die Produktleckage geschlossen werden. Die erforderliche Nachweisgenauigkeit läßt sich daher nur annähernd durch lange Prüfzeiten erzielen.

Die US 4 474 053 beschreibt ebenfalls ein Verfahren zur Ermittlung der Dichtheit der Rohrinstallationen und der zementierten Verrohrung. Zur Dichtheitsprüfung wird die anstehende Sohle oder das Speichermedium unter Verwendung eines gasförmigen Prüfmediums aus den Prüfraum im Bereich des Rohrschuhs bis in den Bereich des Kavernendaches verdrängt, wobei während der Prüfdauer weitere Mengen an Prüfmedium zum Ausgleich von Leckverlusten eingeleitet werden. Die Einleitung weitere Mengen an Prüfmedium erfolgt hier jedoch vorwiegend mit dem Ziel der Aufrechterhaltung des Prüfdruckes und weniger um das Prüfgasvolumen konstant zu halten. Die Dichtheit der Zementierung und der Rohrinstallationen wird wiederum unter Erfassung von Druckänderungen innerhalb des Prüfabschnittes auf der Grundlage der Verlustmenge an Prüfmedium ermittelt. Die vorgeschlagene Lösung läßt die notwendigen Einmessung und Aufrechterhaltung eines konstanten Spiegelstandes des anstehenden Mediums für die genaue Bestimmung der Leckrate und damit für eine genaue Aussage zur Dichtheit völlig offen. Wie in den vorstehenden Ausführungen dargelegt, werden die durch Spiegelstandsänderungen infolge der Kompressibilität des anstehenden flüssigen Mediums und der Konvergenz des Gebirges ausgelösten Meßfehler nicht kompensiert. Dichtheitsprüfungen, die die Spiegelstandsveränderungen auf Grund von Volumenänderungen des in der Kaverne anstehenden Mediums nicht berücksichtigen, sind daher stets mit großen Fehlern behaftet. Bekannt ist auch, daß die Spiegelbestimmung aus der Differenz von Ring- und Steigraumdruck große Fehlerquellen beinhaltet, die insbesondere bei großen Bohrungen und bei großen Kavernenhalsdurchmessern zum Tragen kommen. Diese Fehler können nur zum Teil durch längere Prüfzeiten aus den Meßergebnissen eleminiert werden und setzen demzufolge lange Prüfzeiten voraus.

Der Erfindung liegt daher die Aufgabe zugrunde, ein Verfahren und eine Einrichtung für die Dichtheitsprüfung rohrschuhnaher Zementationsbereiche vorzuschlagen, bei denen selbst bei offener Kaverne Spiegeländerungen ausgeschlossen bzw. ausgeglichen werden und der sonst aus Spiegel- und Durchmesseränderung resultierende Fehleranteil gleich Null wird.

Diese Aufgabe wird dadurch gelöst, daß während der Prüfdauer weitere Mengen an Prüfgas in den Prüfraum eingeleitet werden und eine nach Kompensation der Leckverluste verbleibende Überschußmenge des Prüfmediums abgeführt und genau vermessen und die Differenz zwischen zusätzlich zugeführtem und abgeführtem Prüfmedium in die Ermittlung der Leckrate einbezogen wird.

Das zusätzliche Prüfgas wird vor seiner Zuführung zweckmäßigerweise genau vermessen und während der Prüfdauer kontinuierlich, intermittierend oder einmalig zum Ende der Prüfdauer zugeführt.

Die Einrichtung zur Durchführung des Verfahrens besteht aus einer Hilfsrohrtour, die auf bekannte Weise in die zementierte Rohrtour eingebaut ist und bis in die Flüssigkeit in der Kaverne hineinragt. Erfindungsgemäß ist die Hilfsrohrtour mit Mitteln zum Eintritt des Prüfmediums in die Hilfsrohrtour versehen und ein Prüfgaspuffer am Kopf des Steigraumes oberhalb des sich in der Hilsrohrtour einstellenden Flüssigkeitsspiegels mit Druck- und Mengenmeßeinrichtungen verbunden.

Vorteilhafterweise kann als Hilfsrohrtour auch der später zu nutzende Soleförderstrang verwendet werden.

Die Hilfsrohrtour oder der Soleförderstrang sind an der Teufe des projektierten Spiegels vorteilhafterweise mit Durchströmöffnungen versehen, die die Abförderung des Prüfgasüberschusses in den Prüfgasüberschußpuffer gewährleisten, der sich oberhalb des Spiegels der anstehenden Flüssigkeit in der Hilfsrohrtour oder im Soleförderstrang einstellt. Bei Verwendung des Soleförderstranges als Hilfrohrtour müssen diese Öffnungen durch geeignete Mittel, die beispielsweise durch Wire-Line-Technik zu betätigen sind, für die Soleförderung zu Beginn der Befüllung der Kaverne mit dem zu speichernden Medium verschließbar sein.

Nach einem weiteren, vorteilhaften Merkmal der Erfindung wird die Hilfsrohrtour bis zum projektierten Spiegelstand der Bohrlochflüssigkeit in der Kavernenbohrung bzw. bis zur unteren Grenze des Prüfraumes geführt, wobei der Rohrschuh der Hilfsrohrtour die Funktion der Durchströmöffnungen übernimmt.

Am Kopf der Hilfsrohrtour ist eine Druckmeßeinrichtung zur Erfassung des Druckverlaufes im Prüfgasüberschußpuffer angeordnet. Ausgehend vom Druckverlauf ist die in den Prüfgasüberschußpuffer eingetretene Prüfgassüberschußmenge errechenbar.

Darüber hinaus ist eine Gasmengenmeßeinrichtung an den Prüfgasüberschußpuffer im Kopf der Hilfrohrtour oder des Soleförderstranges angeschlossen, um auch größere Mengen an Prüfgasüberschuß als im Pufferraum aufnehmbar sind, zu bestimmen und um die Berechnung der Puffergasmenge abschließend kontrollieren zu können. Dem Gasmengenmeßgerät ist zweckmäßigerweise ein Flüssigkeitsabscheider vorgeschalten.

Das gasförmige Prüfmedium wird über eine Zuführungsleitung mittels Kompressoren in den Ringraum zwischen zementierter Rohrtour und der Hilfsrohrtour eingebracht. Zur Einleitung weiterer genau vermessener Prüfgasmengen für den Ausgleich der Leckraten und für die Sicherung eines konstanten Spiegelstandes der anstehenden Speicherflüssigkeit ist die Zuführungsleitung mit einer Bypaßleitung und einem zwischengeschalteten Mengenmeßinstrument versehen. Das Meßinstrument kann gleichfalls in die Saugleitung des Verdichters eingebunden sein.

Eine weitere sehr genaue Ausführung besteht darin, an Stelle des Meßinstruments in der Bypaßleitung Vorratsflaschen mit genau vermessenen Inhalt an Prüfmedium in die Zuführungsleitung für das Püfmedium einzubinden und die während der Prüfdauer notwendige Einleitung weitere Prüfgasmengen in den Prüfraum mit Hilfe dieser Vorratsflaschen, die immer wieder aufgefüllt werden können, zu realisieren.

Nach Einleitung des gasförmigen Prüfmediums und Druckaufgabe wird zunächst die anstehende Bohrlochflüssigkeit aus dem Ringraum und dem Prüfraum unterhalb der letzten zementierten Verrohrung soweit in die Kaverne verdrängt bis das Prüfmedium über die Durchströmöffnungen, die im Falle der Verwendung des Soleförderstranges als Hilfsrohrtour nach der Dichtheitsprüfung geschlossen werden müssen, in den Prüfgasüberschußpuffer abfließt und sich an der Oberkantenteufe der Durchströmöffnungen ein konstanter Spiegelstand einstellt. Mit Hilfe der an der zementierten Rohrtour und an der Hilfsrohrtour angeordneten Druckmeßeinrichtungen wird anschließend der für die Beurteilung der Dichtheit notwendige Druckaufbau und Druckverlauf erfaßt und registriert. Die gemäß der Erfindung während der Prüfdauer zusätzlich zugeführten und genau vermessenen Mengen an Prüfmedium treten, soweit sie nicht zur Kompensation der Leckverluste unter Aufrechterhaltung des Spiegelstandes verbraucht werden, über die Durchströmöffnungen in den Prüfgasüberschußpuffer ein und werden bei Abförderung über Druck- und Mengenmeßgeräte denen ein Flüssigkeit-Gas-Abscheider vorgeschaltet ist oder über den Druckaufbau im Prüfgasüberschußpuffer mittels Druckmeßeinrichtung erfaßt und registriert. In die Berechnung der Leckrate geht somit erfindungsgemäß neben dem Prüfgasvolumen und den Druckänderungen auch die Differenz von zugeführter und in den Prüfgasüberschußpuffer übergetretener Prüfgasmenge ein.

Durch die Erfindung wird eine Möglichkeit geschaffen, in relativ kurzer Zeit Dichtheitsprüfungen rohrschuhnaher Zementationsintervalle auch an solchen Kavernenbohrungen durchzuführen, bei denen eine Trennung von Kavernenbohrung und Kaverne nicht möglich oder aus wirtschaftlichen Gründen nicht zu vertreten ist.

Darüber hinaus ist die erfindungsgemäße Lösung auch auf anderen Bohrungen anwendbar, wenn auch nicht zwingend notwendig.

Die Erfindung ermöglicht es, den Spiegelstand des anstehenden Speichermediums über die Zeit der Dichtheitsprüfung trotz einer eventuellen Prüfgasverlustrate und trotz etwaiger Druckänderungen an einer vorher eingestellten Teufe zu fixieren, wodurch keine mit relativ großen Fehlern behaftete Volumenänderungen des Prüfgases eintreten können. Somit erreicht das vorgeschlagene Verfahren eine hohe Sensibilität und gestattet bei den oben spezifizierten Anwendungsfällen die Prüfzeit auf einen Bruchteil der sonst notwendigen Prüfzeiten herabzusetzen.

Die Verkürzung der Prüfzeiten gestattet ferner, Prüfzyklen beliebig zu wiederholen und so zeitabhängige Veränderungen (Tendenzen) in der Leckratenentwicklung zu erfassen und zu bestimmen.

Die Erfindung soll nachstehend an einem Ausführungsbeispiel näher erläutert werden. Die dazugehörige Zeichnung zeigt in schematischer Darstellung die Prüfeinrichtung zur Durchführung der Dichtheitsprüfung nach der Erfindung.

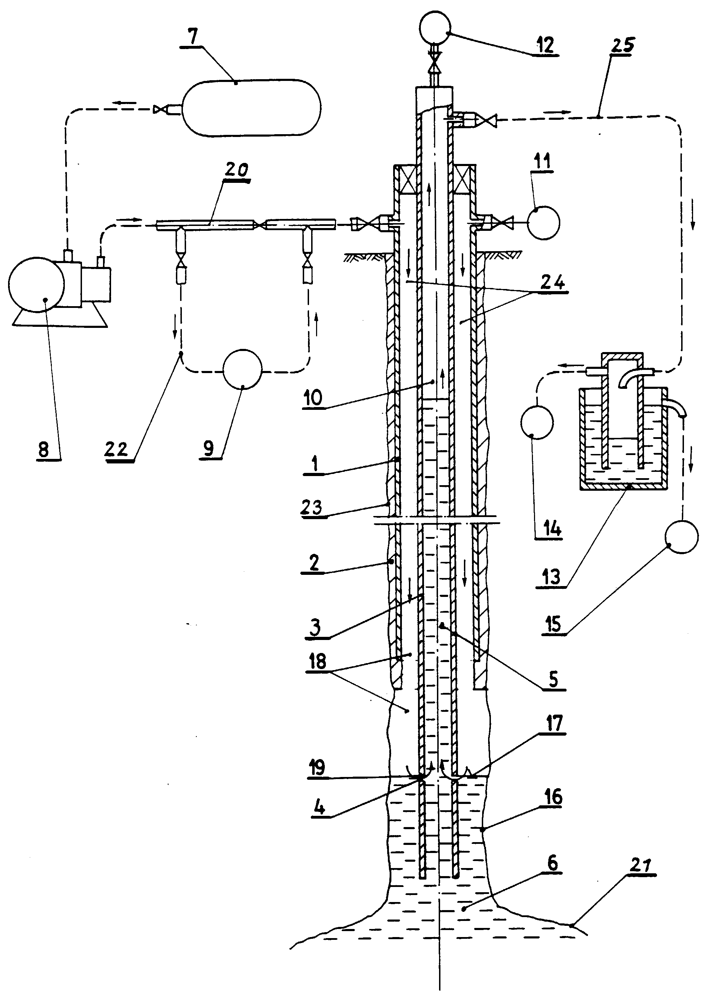

In der Zeichnung sind Installationsteile, die in bezug auf die Erfindung nicht von Bedeutung sind z. B. nachgeschaltete Rohrtouren, Packerinstallationen, nicht enthalten.

Dargestellt ist eine Kavernensonde 23 mit dem Ansatz der darunter befindlichen Kaverne 21. Kavernensonde 23 und Kaverne 21 sind nicht durch Zementbrücken o. ä. voneinander getrennt. Der zwischen Kaverne 21 und der Verrohrung 1 befindliche Kavernenhals 16 ist im Durchmesser schwankend. Bei den durchzuführenden Durchmesserbestimmungen und den zuzuordnenden Teufenangaben sind Fehler zu erwarten, die bei Spiegelstandsänderungen das Gesamtergebnis negativ beeinflussen und deshalb lange Prüfzeiten erfordern würden, um ein Meßergebnis mit hoher Repräsentans zu erreichen.

Durch die Verbindung des prüfgasgefüllten Raumes 18 mit der Kaverne 21 entstehen auf Grund der Kompressibilität des Solevolumens und auf Grund der Elastizität der Kavernenkontur auch bei geringen Prüfdruckänderungen relativ große, schwer meßbare Änderungen des Spiegelstandes 17, die, sofern sie nicht ausgeglichen oder kompensiert werden, das Meßergebnis entscheidend verfälschen. Nur über eine sehr lange Prüfdauer könnte eine repräsentative Aussage über die Dichtheit im zu prüfenden Zementationsintervall erreicht werden. Da eine längere Prüfdauer oftmals schon aus wirtschaftlichen Gründe zu verwerfen ist, kann eine Dichtheitprüfung nur mit sehr sensiblen Meßverfahren unter gleichzeitiger Erfassung der durch Spiegelstandsveränderungen und Kaliberänderungen verursachten Volumenänderungen im Prüfraum durchgeführt werden.

Zur Dichtheitsprüfung nach der Erfindung mit Fixierung des Spiegelstandes 17 der anstehenden Bohrlochflüssigkeit wird in die zementierte Rohrtour 1 auf bekannte Weise eine Hilfrohrtour 3 eingebaut, die bis in die Flüssigkeit 6 in der Kaverne 21 hineinreicht. Als Hilfsrohrtour 3 kann vorteilhafter Weise auch der für die spätere Gaserstbefüllung zu nutzende Soleförderstrang verwendet werden. In der Ebene des projektierten Spiegelstandes 17 sind Durchströmöffnungen 4 angeordnet, die bei Nutzung des Soleförderstrang als Hilfsrohrtour 3 durch Verschlußstücke, welche mittels Wire-Line-Techniken betätigt werden, verschließbar sind. Das Prüfmedium, zumeist Luft, wird mit dem Verdichter 8 über die Zuführungsleitung 20 in den Ringraum 24 zwischen zementierter Rohrtour 1 und der Hilsrohrtour 3 eingebracht und unter Prüfdruck gesetzt. Bei Einsatz spezifischer Prüfgase wird dieses in gesonderten Prüfgasbehältern 7 zur Verfügung gestellt. Mit Hilfe des aufgebrachten Prüfdruckes wird zunächst die in der Kavernenbohrung 23 und im Prüfraum 18 anstehende Flüssigkeit 6 in die Kaverne 21 verpreßt. Bei Erreichen der Durchströmöffnungen 4 entweicht das zuviel eingebrachte Prüfgas über die Öffnungen 4 und sammelt sich als Gaspuffer 10 am Kopf der Hilfsrohrtour 3, wobei sich an der Oberkantenteufe 19 der Durchströmöffnungen 4 ein konstanter Spiegelstand 17 der Flüssigkeit 6 einstellt und die Unterkante des Prüfraumes 18 eindeutig festlegt. Der aus dem Prüfgasüberschuß entstehende Gaspuffer 10 bildet sich oberhalb der in der Hilfsrohrtour 3 anstehenden Flüssigkeit 6 aus und ist über eine Verbindungsleitung 25, einem Flüssigkeit-Gas-Abscheider 13 sowie über eine Mengenmeßeinrichtung 14 abförderbar und meßbar.

Die im Prüfgasüberschußpuffer 10 befindliche Menge an Prüfgas ist jederzeit eindeutig aus der Differenz der Drücke, am Kopf der Hilfsrohrtour 3 und der zementierten Rohrtour 1 bestimmbar und wird durch die Druckmeßinstrumente 11 und 12 gemessen.

Während der Prüfzeit, die nach Einstellung eines konstanten Spiegelstandes 17 an der Oberkantenteufe 19 der Durchströmöffnungen 4 beginnt, erfolgt eine Beobachtung des Prüfdruckes an der Druckmeßeinrichtung 11. Ferner werden dem Prüfraum 18 über die Bypaßleitung 22 und der Mengenmeßeinrichtung 9 weitere, genau vermessene Prüfgasmengen zugeführt, die größer als die Leckgasrate sind, damit sich der Spiegelstand 17 der Flüssigkeit 6 immer wieder auf die Oberkantenteufe 19 der Durchströmöffnungen 4 eingestellt. Dadurch gelangen auch in den Prüfgasüberschußpuffer 10 weitere Mengen an Prüfgas. Der damit verbundene Druckanstieg im Puffer 10 wird mit dem Druckmeßinstrument 12 erfaßt und weist nach, daß die zudosierte Prüfgasmenge größer als die Leckrate ist. Dadurch sind Zwischenauswertungen in bezug auf die zu ermittelnde Dichtheit im Prüfungsintervall und ein Variieren der nachzudosierenden Prüfgasmengen möglich.

Sofern es zwischen dem Prüfraum 18 und dem Prüfgasüberschußpuffer 10 zu einem Druckausgleich kommen sollte, kann zur Fortsetzung der Dichtheitsprüfung mit Hilfe der Gasmengenmeßeinrichtung 14 jederzeit wieder eine Druckdifferenz hergestellt werden.

Am Ende der Prüfzeit kann zur Kontrolle der aus den Druckdifferenzen rechnerisch ermittelten Menge an Prüfgasüberschuß dieser Überschuß bis zum Durchschlag der Flüssigkeit 6 über die Gasmengenmeßeinrichtung 14 abgefördert und erfaßt werden. Der Flüssigkeitsabscheider 13 und das Auffang- und Mengenmeßgerät 15 verhindern das Eindringen von Flüssigkeit 6 in das Gasmengenmeßgerät 14.

In die Auswertung der Dichtheitsprüfung gehen neben der Bilanz aus Druckänderung und Druckentwicklung im Prüfraum 18, die mit dem Druckmeßinstrument 11 erfaßt werden, folgende Größen ein:
- nachträglich zudosierte Mengen an Prüfgas, gemessen durch die Mengenmeßeinrichtung 9
- Druckanstieg bzw. Mengenzuwachs im Prüfgasüberschußpuffer 10, gemessen mit dem Manometer 12, und die gegebenfalls
- zwischenzeitlich abgeförderten Überschüsse an Prüfmedium und Flüssigkeit 6, gemessen mit der Mengenmeßeinrichtung 14.

## Patentansprüche

1. Verfahren zur Dichtheitsprüfung an rohrschuhnahen Zementationen von Gasspeicherkavernen, bei dem ein gasförmiges Prüfmedium verwendet wird, das bei Verdrängung der anstehenden Sole oder des Speichermediums aus dem Prüfraum in diesen eingeleitet und anschließend mit einem Prüfdruck beaufschlagt wird, und bei dem nach Ablauf einer vorbestimmten Prüfdauer bei Erfassung von Druckänderungen innerhalb des Prüfraumes auf der Grundlage der Verlustmenge an Prüfmedium die Dichtheit ermittelt wird, wobei während der Prüfdauer weitere Mengen an Prüfmedium in den Prüfraum eingeleitet werden, **dadurch gekennzeichnet**, daß eine nach Kompensation der Leckverluste verbleibende Überschußmenge des Prüfmediums abgeführt und genau vermessen und die Differenz zwischen zusätzlich zugeführtem und abgeführtem Prüfmedium in die Ermittlung der Leckrate einbezogen wird.

2. Verfahren nach Anspruch 1, **dadurch gekennzeichnet**, daß die zusätzlich zugeführte Menge an Prüfmedium genau vermessen und kontinuierlich zugeführt wird.

3. Verfahren nach Anspruch 1 , **dadurch gekennzeichnet**, daß die zusätzliche, genau vermessene Prüfmediummenge während der Prüfdauer intermittierend zugeführt wird.

4. Verfahren nach Anspruch 1, **dadurch gekennzeichnet**, daß eine zusätzliche, genau vermessene Prüfmediummenge einmalig zum Ende der Prüfdauer zugeführt wird.

5. Einrichtung zur Durchführung des Verfahrens nach einem oder mehreren der Ansprüche 1 bis 4 mit einer während der Prüfdauer in die mit Zuführungen für das Prüfmedium und mit Druckmeßeinrichtungen ausgestattete zementierte Rohrtour (1) eingesetzten Hilfsrohrtour (3), die während der Prüfzeit zumindest teilweise mit Flüssigkeit gefüllt und mit Druckmeßeinrichtungen versehen und bis in die Speicherflüssigkeit der Kaverne hineingeführt ist, **dadurch gekennzeichnet**, daß die Hilfsrohrtour (3) mit Mitteln zum Eintritt des Prüfmediums in die Hilfsrohrtour (3) versehen und ein Prüfgaspuffer (10) am Kopf des Steigraumes (5) oberhalb des sich in der Hilsrohrtour (3) einstellenden Flüssigkeitsspiegels mit Druck- und Mengenmeßeinrichtungen (12-15) verbunden ist.

6. Einrichtung nach Anspruch 5, **dadurch gekennzeichnet**, daß die Hilfsrohrtour (3) im Bereich des Kontaktes zwischen gasförmigem Prüfmediumvolumen und Speicherflüssigkeit (6) mit Durchströmöffnungen (4) versehen ist.

7. Einrichtung nach Anspruch 5, **dadurch gekennzeichnet,** daß die Hilfsrohrtour (3) bis an den projektierten Spiegelstand (17) der Speicherflüssigkeit (6) geführt ist.

8. Einrichtung nach Anspruch 5**, dadurch gekennzeichnet**, daß als Hilfsrohrtour(3) der spätere Soleförderstrang dient, der im Kontaktbereich zwischen Flüssigkeit (6) und Prüfmedium mittels Wire-Line-Technik zu betätigende Verschlußstücke aufweist.

9. Einrichtung nach einer der Ansprüche 5 bis 8, **dadurch gekennzeichnet**, daß der Kopf des Steigraumes (5) mit Mengenmeßeinrichtungen (14;15) und vorgeschaltetem Flüssigkeit-Gas-Abscheider (13) verbunden ist.

10. Einrichtung nach einer der Ansprüche 5 bis 9, **dadurch gekennzeichnet,** daß die Zuführungsleitung (20) für das Prüfmedium mit einem Mengenmeßgerät (9) versehen ist.

11. Einrichtung nach einer der Ansprüche 5 bis 10, **dadurch gekennzeichnet,** daß in die Zuführungsleitung (20) Vorratsflaschen für das Prüfmedium (5) eingebunden sind, wobei der Druck des Prüfmediums (5) in den Flaschen und der Flascheninhalt genau vermessen sind.

## Claims

1. Process for the testing of density in cementations near the shoe casing of gas storage caverns in which a gaseous testing medium is used. The gas forces the brine or storage medium out of the testing space and is put under pressure. The density is determined after a predetermined testing period with the changes in pressure within the testing space recorded. These changes are determined on the basis of the amount of testing gas lost, whereby additional quantities of testing gas are pumped into the testing space during the testing period. The process is **characterized by** the fact that an excess amount of testing medium is taken back up after compensation for the leakage. This volume is precisely measured and the difference between the amount added and the amount drawn off included in the calculation of the leakage rate.

2. Process in accordance with claim 1, characterized by the additional introduction of precisely measured testing medium and constant introduction.

3. Process in accordance with claim 1, characterized by the additional introduction of precisely measured testing medium and intermittent introduction.

4. Process in accordance with claim 1, characterized by the additional introduction of precisely measured testing medium and single introduction at the end of the testing period.

5. Equipment to conduct the process in accordance with one or more of the claims 1 to 4 with one of the cemented strings (1) equipped for the testing period with auxiliary string (3) with supply lines for the testing medium and pressure meters. The auxiliary string must be at least partially filled with fluid during the testing period and equipped with pressure meters and project into the storage fluid of the cavern. The equipment is characterized by the auxiliary strings (3) being equipped with means for introducing the testing medium in the auxiliary string (3) and a testing gas buffer (10) at the head of the uptake space (5) above the level of the fluid in the auxiliary string (3) connected to pressure and volume meters (12-15)

6. Equipment in accordance with claim 5, characterized by the auxiliary string (3) equipped with flow holes (4) in the area of the contact between the gaseous testing medium volume and storage fluid (6).

7. Equipment in accordance with claim 5, characterized by the auxiliary string (3) projecting into the storage fluid (6) at the expected level (17).

8. Equipment in accordance with claim 5, characterized by the brine barrow tram functioning as the auxiliary string (3) equipped with caps to be controlled by wire-line technique in the contact area between the fluid (6) and the testing medium.

9. Equipment in accordance with one of the claims 5 to 8, characterized by the head of the uptake space (5) being connected with volumeters (14,15) and preceded by a fluid-gas cutter.

10. Equipment in accordance with one of the claims 5 to 9, characterized by the supply line (20) for the testing medium is equipped with a volumeter (9).

11. Equipment in accordance with one of the claims 5 to 9, characterized by bottles for the testing medium (5) are connected to the supply line (20), whereby the pressure of the testing medium (5) in the bottles and the content of the bottles is precisely measured.

## Revendications

1. Procédé d'essai d'étanchéité aux parties cimentées d'un tuyau de cavernes de stockage de gaz pour lequel un support d'essai gazeux est utilisé, support qui est injecté dans l'espace d'essai en y délogeant la saumure à fleur de terre ou le support de stockage et support auquel on applique pour finir une pression d'essai, et procédé pour lequel l'étanchéité est déterminée après l'écoulement d'une durée d'essai prédéterminée en saisissant des changements de pression à l'intérieur de l'espace d'essai sur la base de la quantité de perte en support d'essai, d'autres quantités de support d'essai étant injectées dans l'espace d'essai pendant la durée d'essai, **caractérisé par le fait qu'**une quantité excédentaire de support d'essai restant après compensation des fuites est évacuée et mesurée précisément et que la différence entre le support d'essai évacué et celui amené en plus est inclue dans la détermination du taux de fuite.

2. Procédé selon la revendication 1, **caractérisé par le fait que** la quantité de support d'essai amenée en plus est précisément mesurée et amenée en continu.

3. Procédé selon la revendication 1, **caractérisé par le fait que** la quantité de support d'essai supplémentaire et précisément mesurée est amenée par intermittences pendant la durée d'essai.

4. Procédé selon la revendication 1, **caractérisé par le fait qu'**une quantité de support d'essai supplémentaire et précisément mesurée est amenée une unique fois à la fin de la durée d'essai.

5. Installation destinée à réaliser le procédé selon l'une ou plusieurs des revendications 1 à 4 avec un train de tiges auxiliaire (3) encastré pendant la durée d'essai dans le train de tige cimenté (1) équipé de conduites d'amenée pour le support d'essai et d'installations de mesure de la pression, train de tiges auxiliaire qui est rempli pendant la période d'essai au moins en partie de liquide et qui est pourvu d'installations de mesure de la pression et qui est introduit jusque dans le liquide de stockage de la caverne, **caractérisée** **par le fait que** le train de tiges auxiliaire (3) est pourvu de moyens destinés à faire entrer le support d'essai dans le train de tiges auxiliaire (3) et qu'un tampon de gaz d'essai (10) situé à la tête de l'espace situé dans le forage (5) au-dessus du niveau de liquide s'égalisant dans le train de tiges auxiliaire (3) est relié à des installations de mesure de la quantité et de la pression (12-15).

6. Installation selon la revendication 5, **caractérisée par le fait que** le train de tiges (3) est pourvu d'ouvertures à circulation libre (4) dans le domaine du contact entre le volume de support d'essai gazeux et le liquide de stockage (6).

7. Installation selon la revendication 5, **caractérisée par le fait que** le train de tiges auxiliaire (3) est conduit jusqu'au niveau projeté (17) du liquide de stockage (6).

8. Installation selon la revendication 5, **caractérisée par le fait que** le tube ultérieur d'exhaure de la saumure, présentant dans le domaine de contact entre le liquide (6) et le support d'essai des obturateurs à manoeuvrer au moyen de la technique du travail au câble, sert de train de tiges auxiliaire (3).

9. Installation selon l'une des revendications 5 à 8, **caractérisée par le fait que** la tête de l'espace situé dans le forage (5) est reliée à des installations de mesure de la quantité (14;15) et à un séparateur liquide/gaz (13) appliqué avant.

10. Installation selon l'une des revendications 5 à 9, **caractérisée par le fait que** la conduite d'amenée (20) pour le support d'essai est pourvue d'un appareil de mesure de la quantité (9).

11. Installation selon l'une des revendications 5 à 10, **caractérisée par le fait que** des bouteilles de stockage pour le support d'essai (5) sont intégrées dans la conduite d'amenée (20), la pression du support d'essai (5) dans les bouteilles et le contenu des bouteilles étant précisément mesurés.
